# EUROPEAN PATENT SPECIFICATION

(11) **EP 4 215 037 B1**
(45) Date of publication and mention of the grant of the patent: **27.08.2025**
(21) Application number: 23151490.2
(22) Date of filing: 13.01.2023
(51) Int. Cl.: A01F 15/07

(54) **BALER**
BALLENPRESSE
PRESSE À BALLES

(30) Priority: 20.01.2022 GB 202200710
(43) Date of publication of application: 26.07.2023
(73) Proprietor: Kuhn-Geldrop B.V., 5667 KP Geldrop (NL)
(72) Inventor: VAN HOEK, Peter Willem Maria, 5754 RL Deurne (NL); VAN DEN WILDENBERG, Leonardus Johannes, 6021 CT Budel (NL)
(74) Representative: Murgitroyd & Company

(56) References cited:
- EP-A1- 0 309 936
- EP-A1- 3 581 018
- EP-A1- 3 590 326
- WO-A1-2020/240426
- US-A- 4 422 373
- US-A- 4 580 398
- US-A- 5 450 704

## Description

The present invention relates to a baler and in particular but not exclusively to a baler for baling bale material comprising an agricultural crop.

Balers for forming cylindrical bales of agricultural crop bale material are well known, and such bales are usually referred to as "round" bales. The baler has a bale chamber within which a cylindrical bale can be formed, means for feeding bale material into the bale chamber, and an arrangement of pressing elements, for example a series of circumferentially spaced rolls and/or a set of belts supported by rolls, which define a part-cylindrical surface of the bale chamber. As is well known in the art, balers can be of the "fixed chamber" or "variable chamber type", depending on the type of pressing element used. The present invention is applicable to both of these types of baler. The invention is also applicable to combined baler/wrapper machines.

Typically, an agricultural baler is pulled by a tractor and driven by the power take off of the tractor.

The bale material, for example an agricultural crop, is picked up from the ground by a pick-up device. The bale material is optionally processed by a cutting device and then fed into the bale chamber, which comprises a pair of side panels and a number of pressing elements, for example rotating compression rollers and/or belts. The bale material is tumbled within the bale chamber and compressed by the pressing elements forming a cylindrical bale. Once the bale has reached a predetermined size and/or compression the feeding is stopped and the bale is then bound with a binding material, which binds the compressed bale material together under pressure. The finished bale is then ejected from the bale chamber.

In both variable chamber and fixed chamber balers the bale chamber typically has a feed opening through which the bale material is fed into the bale chamber as the bale is formed. The feed opening is typically located between a pair of pressing elements, for example a pair of compression rolls or belt support rolls, which are spaced apart to form the feed opening.

In order to support the bale material and the surface of the partly-formed bale as it moves across the feed opening, a support element is usually provided in or adjacent to the feed opening. The support element typically comprises a fixed plate-like structure that is attached to the side panels of the baler and extends across the width of the feed opening.

During filling of the bale chamber the support element supports the surface of the partly compressed/formed bale as it rotates across the feed opening and helps to prevent bale material falling away from the surface of the bale. If the bale is not supported in this way, bale material may fall away from the surface of the bale and may then be fed back into the bale chamber in lumps, which can affect the shape of the bale. As a result, the bale can be badly formed, for example irregularly shaped and lacking roundness.

The support element partly bridges the gap between the pressing elements on either side of the feed opening and helps to prevent bale material from breaking away from the bale surface during forming of the bale. The support element mat be essential for making well-formed round bales, particularly under circumstances where there is little cohesion in the compacted bale material (for example, when the bale material has a short length) or when the bale material expands easily after compression (for example when the bale material is relatively dry).

It is known to mount the support element to the side panels of the baler with releasable attachment devices, so that the support element can be removed when it is not needed, for example when the bale material has good cohesion and does not expand excessively. In this case, the attachment devices are located in fixed position on the side panels of the baler.

In many balers the bale material is bound using net binding material. Lately balers have been developed that use stretch film binding material to bind the bale.

When film binding material is used certain problems can sometimes arise in relation to the support element. The support element presses against the surface of the rotating bale both during forming of the bale and subsequently during binding of the bale. The film binding material is very sensitive to damage and when it rubs across the surface of support element the film binding material can easily tear. As a result the film binding applied to the surface of the bale can lose its function as a barrier for gas and moisture. The binding function of the film binding material can also be affected, so that the bale is no longer maintained under sufficient compression.

With net binding material these problems do not arise because net binding material is much tougher and it slips more easily over the surface of the support element, so that it is not damaged by rubbing against the support element.

A known baler is disclosed in WO2020240426.

It is an object of the present invention to provide a baler that mitigates one or more of the aforesaid problems.

According to one aspect of the present invention there is provided a baler as defined by one or more of the claims.

The baler includes a plurality of pressing elements for rotating and pressing a mass of bale material in a bale chamber to form a round bale, a feed opening through which bale material can be fed into the bale chamber, and a support element located within the feed opening. The support element is displaceable between a supporting position and a retracted position, wherein the supporting position is located adjacent the bale chamber and the retracted position is located further away from the bale chamber.

The feed opening is located between a pair of said pressing elements.

The support element is located between the pair of pressing elements.

The support element may optionally be configured in the supporting position to engage and support the mass of bale material as it rotates within the bale chamber.

The support element may optionally not support or provide a reduced level of support for the mass of bale material as it rotates within the bale chamber.

The support element is configured to be located in the retracted position during at least part of a binding operation, in which binding material is applied to the round bale in the bale chamber, so that the support element does not press on the binding material as it is passed around the bale. This helps to avoid damaging the binding material. The binding material can be a stretch film binding material. The support element can be configured to be located in the supporting position during making of the bale so that it supports the mass of bale material in a bale chamber.

Optionally, the supporting position and the retracted position are separated by a distance D, where D is at least 1cm, or at least 2cm.

Optionally, the distance D is in the range 1-10cm, or 2-10cm, or 2-5cm.

Optionally, the bale chamber has a rotational axis that is defined by the longitudinal axis of a round bale in the bale chamber, and the retracted position is located radially further than the supporting position from the rotational axis.

Optionally, the baler includes a binding apparatus for binding the bale in the bale chamber with stretch film binding material.

Optionally, the baler further comprises a support mechanism that enables the movement of the support element between the supporting position and the retracted position.

Optionally, the support mechanism enables linear movement of the support element.

Optionally, the support mechanism enables pivoting movement of the support element, optionally about a pivot axis. Optionally, the pivot axis coincides with a rotational axis of a pressing element. Optionally, the support mechanism includes a lever. Optionally, one end of the lever is connected to the support element. The support element can comprise an elongate body. The elongate body can have a teardrop or oval transverse cross-section. Optionally, the lever is arranged to pivot about the pivot axis. Optionally, the pivot axis can be located in a central portion of the lever. Optionally, the pivot axis is located towards one end of the lever, and preferably towards the end of the lever connected to the support element. Optionally, the pivot axis is arranged parallel with the rotational axis of the pressing element. Optionally, the pivot axis is arranged parallel with a central longitudinal axis of the support element. Optionally, the pivot axis is located on the lever in a position such that the pivot axis does not pass through the elongate body.

Optionally, the support mechanism comprises a control element that controls movement of the support element between the supporting position and the retracted position.

Optionally, the control element comprises a resilient element that provides a biassing force that urges the support element towards the supporting position.

Optionally, the resilient element includes a control mechanism that is configured to adjust the biassing force.

Optionally, the control element comprises an actuator that is operable to move the support element between the supporting position and the retracted position.

Optionally, the baler further comprises a control system that controls operation of the control element.

Optionally, the control system is configured to control operation of the control element, such that the support element is located in the supporting position during a bale making operation when a round bale is formed in the bale chamber, and the support element is located in the retracted position during at least part of a binding operation when a binding material is applied to the round bale in the bale chamber.

Optionally, the control system is configured move the support element from the supporting position to the retracted position at the start of the binding operation or during the binding operation.

Optionally, the control system is configured move the support element from the retracted position to the supporting position at or prior to the start of the bale making operation.

Alternatively, the support element may be resiliently biased towards the supporting position and configured to move from the supporting position to the retracted position against a resilient biassing force.

Optionally, the control system includes a user interface via which a user may control operation of the control system.

Optionally, the baler further comprises a binding mechanism that is configured to apply a binding material to a bale formed in the bale chamber.

Optionally, the baler is a fixed chamber round baler.

Optionally, the pressing elements comprise rotary rollers.

Optionally, the baler is a fixed chamber round baler.

Optionally, the pressing elements comprise flexible belts.

Optionally, the baler is an agricultural baler that is configured for baling an agricultural crop material.

Optionally, the baler includes a pick-up apparatus for picking up bale material from the ground and feeding it to the bale chamber for baling.

According to one embodiment, the baler is a variable chamber baler comprising a plurality of endless belts that extend around two or more of the pressing elements, wherein said belts define the bale chamber. Optionally, the belts are separated widthwise from one another with regard to the width of the bale chamber.

According to another embodiment, the baler is a fixed chamber baler comprising a plurality of plurality of rolls that define the bale chamber.

The baler is preferably an agricultural baler that is configured for baling an agricultural crop material. Advantageously, the baler includes a pick-up apparatus for picking up bale material (e.g. crop material) from the ground and feeding it to the bale chamber for baling.

Certain embodiments of the invention will now be described by way of example with reference to the accompanying drawings, wherein:
Figure 1 is a sectional side view of a baler according to an embodiment of the invention;
Figure 2 is a simplified side section showing certain components of the baler;
Figures 3a, 3b, 3c and 3d illustrate alternative support mechanisms for a support element that comprises part of the baler, and
Figure 4 is a schematic diagram illustrating a control system for the baler.

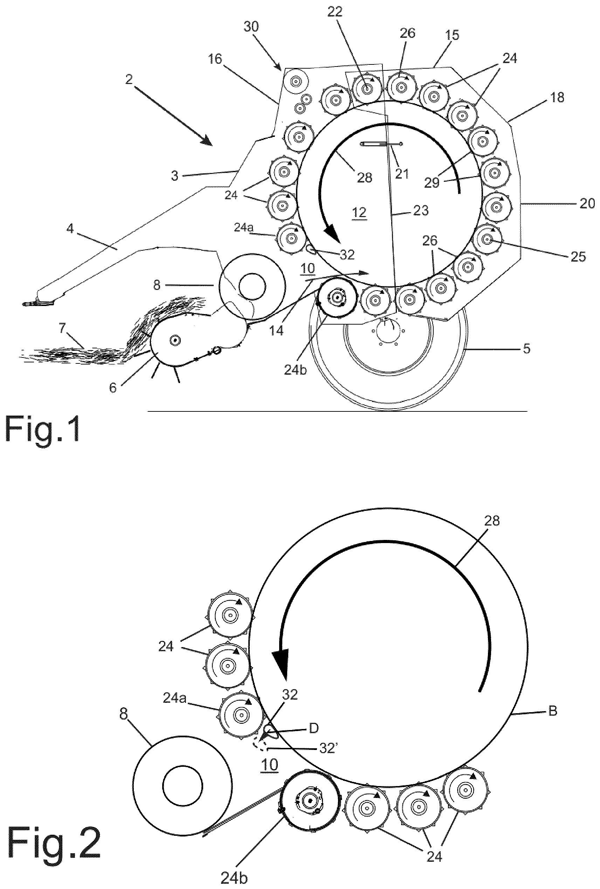

Figure 1 of the drawings illustrates an agricultural baler 2 according to one embodiment of the invention. In this embodiment the baler 2 is a fixed chamber round baler. However, it could alternatively be a variable chamber round baler.

The baler 2 comprises a wheeled machine that is intended to be drawn behind a tractor or other propelling vehicle. The baler 2 includes a frame 3, a drawbar 4 and a pair of wheels 5. The baler 2 will normally pick up bale material 7, for example crop material that has already been cut or mown, and which is lying on the ground. A pick-up device 6 is configured to pick up the bale material 7 from the ground and feed it to a rotary feeding device 8, which may optionally include a chopping device comprising a set of rotating knives. The chopped bale material is then fed over a feed chute 9 and through a feed opening 10 into a cylindrical bale chamber 12 in the direction of arrow 14.

The baler 2 comprises a housing 15 that includes a fixed front part 16 that is attached to the frame 3 and a pivoting rear part 18. The bale chamber 12 is located within the housing 15, approximately half of the bale chamber being located in the front part 16 and half in the rear part 18. Thus, the front and rear parts 16, 18 of the housing 15 each comprise approximately half of the bale chamber 12. The pivoting rear part 18 of the housing serves as a tailgate 20, which can be opened by pivoting the tailgate 20 about a pivot point 22 located towards the upper part of the housing 15. An actuator 21, for example a hydraulic actuator, may be provided for adjusting the position of the tailgate 20. The tailgate 20 is shown in a closed condition in Fig. 1.

The cylindrical bale chamber 12 includes a pair of opposed side panels 23 and plurality of pressing elements 24, in this embodiment a set of compression rollers, which are spaced around the circumference of the bale chamber 12. Some of these compression rollers 24 are mounted within the fixed front part 16 of the bale chamber 12, and some are provided within the pivoting rear part 18 of the bale chamber 12. The compression rollers 24 are provided with drive means 25, for example drive sprockets, which are driven by a drive chain 27 and are configured to be rotated in the same direction, as indicated by the arrows 26 in Figs. 1-3. This causes any bale material in the bale chamber 12 to rotate in the contrary direction, as indicated by arrow 28. The compression rollers 24 may optionally be provided with traction elements 29, for example ribs or studs, which project from the cylindrical surfaces of the compression rollers 24 in order to transfer drive effectively to the bale material in the bale chamber 12.

Alternatively, in a variable chamber baler the pressing elements 24 may for example comprise a set of belts, chains of similar flexible elongate elements, which may be supported by rolls, sprockets or similar components.

A binding device 30 is provided for feeding a binding material, for example a net binding material or a stretch film binding material, into the bale chamber 12 to bind a bale B that has been formed in the bale chamber 12.

The feed opening 10 is located between a pair of the pressing elements comprising a first pressing element 24a and a second pressing element 24b. In this embodiment the first pressing element 24a is located above the feed opening 10, and the second pressing element 24b is located below the feed opening 10. As the bale material rotates within the bale chamber 12 in the direction of arrow 28 it rotates initially past the first pressing element 24a and subsequently past the second pressing element 24b.

A support element 32 is located within the feed opening 10. In this embodiment the support element is located just below the first support element 24a in the upper part of the feed opening 10. It is positioned close to the outer circumference of a bale B formed in the bale chamber 12. The support element is positioned to support the bale material forming the bale B, when the bale is either partly-formed or fully-formed, to help prevent bale material falling away from the surface of the bale B as it travels across the feed opening 10 between the first pressing element 24a and the second pressing element 24b.

In this embodiment the support element 32 comprises an elongate body, for example in the form of an elongate beam that extends across the width of the bale chamber and it has a transverse cross-sectional shape resembling an oval or raindrop having a convex outer surface. The transverse cross-section can be perpendicular to a longitudinal axis of the support element 32. The outer surface is smooth and the shape of the support element 32 is designed to allow the surface of the bale to run smoothly over the support element 32 with low friction. The support element 32 may however have other shapes, for example it may comprise a flat or curved plate or a beam having a different transverse cross-sectional shape, for example square, rectangular, elliptical or a combination of straight and/or curved surfaces.

As illustrated more clearly in Fig. 2, the support element 32 is configured to move between a supporting position shown in solid lines in which it is positioned close to the outer circumference of the bale B to support the bale material during forming of a bale, and a retracted position 32' shown in broken lines in which it is displaced away from the outer circumference of the bale B. Typically, the support element 32 may move through a distance D in the range 2-5 centimetres between the supporting position 32 and the retracted position 32'.

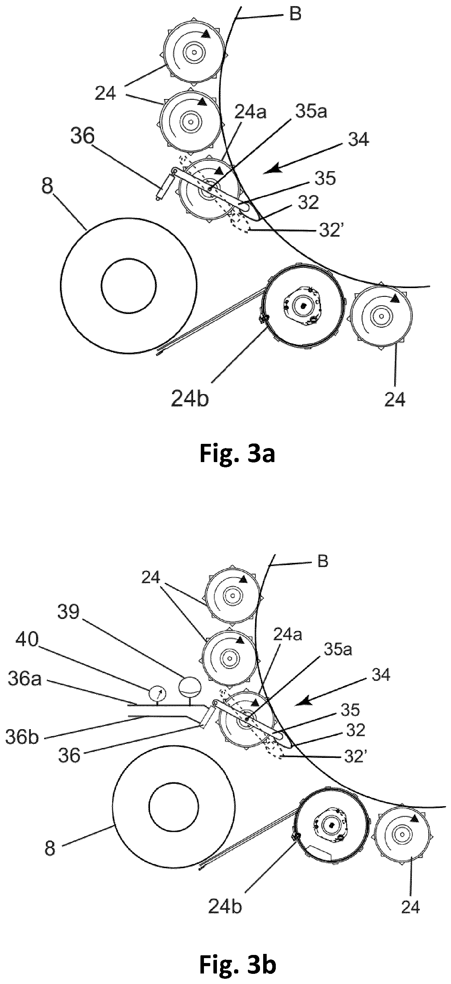

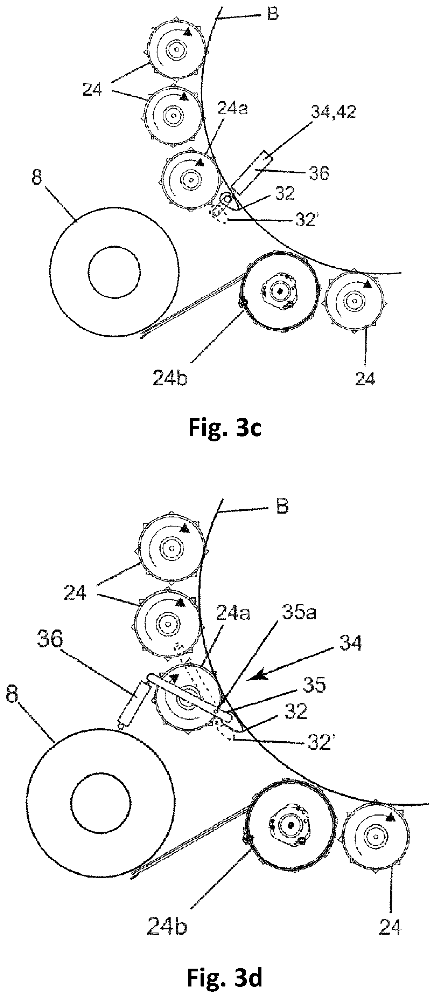

As illustrated for example in figures 3a, 3b, 3c and 3d the support element 32 may be supported by a support mechanism 34 that allows the support element 32 to move between the supporting position 32 and the retracted position 32'. Various different types of support mechanism 34 may be provided as illustrated in the figures.

For example, in a first embodiment as illustrated in figure 3a the support mechanism 34 may comprise a pivot support mechanism that allows the support element 32 to pivot between the supporting position shown in solid lines and the retracted position shown in broken lines. In this embodiment the support mechanism 34 comprises a lever 35 that is connected at a first end thereof to the support element 32 and is supported for pivoting movement about a pivot axis 35a to enable movement of the support element 32 towards and away from a bale B in the bale chamber. In the example of figure 3a the pivot axis 35a coincides with the rotational axis of the first pressing element 24a. An advantage of having the pivot axis 35a coincide with the rotational axis of the first pressing element 24a is that the distance between the first pressing element 24a and the support element 32 does not change as the support element 32 moves between supporting position and the retracted position 32'. Typically, the pivot axis 35a is located in a central portion of the lever 35.

The pivot axis 35a may alternatively be located elsewhere such that it does not coincide with the rotational axis of the first pressing element 24a. This is illustrated in a second embodiment, which is shown in Figure 3d. The embodiment of Figure 3d includes the support mechanism 34 comprising a pivot support mechanism that allows the support element 32 to pivot between the supporting position shown in solid lines and the retracted position 32' shown in broken lines. In this embodiment the support mechanism 34 comprises the lever 35, which is connected at a first end thereof to the support element 32, and is supported for pivoting movement about a pivot axis 35a to enable movement of the support element 32 towards and away from a bale B in the bale chamber. The pivot axis 35a of the lever is arranged parallel to the rotational axis of the first pressing element 24a. The pivot axis 35a can be located towards one end of the lever 35, and preferably towards the end of the lever that is connected to the support element 32. The pivot axis 35a is located to enable the support mechanism 34 to enlarge the distance between the bale B and the support element 32. Typically, this can be achieved by locating the pivot axis 35a on the lever in a position that is adjacent to, but outside of, the support element 32. That is, the pivot axis 35a does not pass through the elongate body 32. The pivot axis 35a is arranged parallel to the elongate body 32.

In the embodiments of Figures 3a and 3d, the support element 32 is urged towards the bale B by a control element 36, which in these embodiments comprises a hydraulic actuator that is connected between a second end of the lever 35 and an anchor point (not shown) of the frame of the baler. By activating the actuator 36 the support element 32 may be moved towards and away from a bale B in the bale chamber as required.

In a third embodiment illustrated in figure 3b the support mechanism 34 again comprises a lever 35 that is connected at a first end to the support element 32 and is supported for pivoting movement about a pivot axis 35a to enable movement of the support element 32 towards and away from a bale B in the bale chamber. The position of the support element 32 relative to the bale B is controlled by a control element 36, which in this embodiment comprises a hydraulic actuator that is connected to the second end of the lever 35. The actuator 36 is connected to a hydraulic control circuit comprising a pair of hydraulic control lines 38a,b. A hydraulic accumulator 39 is connected to the first control line 38a and allows movement of the support element in response to variations in the profile of the rotating bale B. A gauge 40 senses the hydraulic pressure in the first control line 38a, allowing operation of the actuator 36 to be monitored.

In a fourth embodiment illustrated in figure 3c the support mechanism 34 may alternatively comprise a sliding support mechanism 42 that enables sliding movement of the support element 32 between the supporting position and the retracted position. The sliding support mechanism 42 may be configured to allow sliding movement of the support element 32 along either a straight linear path or a curved path. The sliding support mechanism 42 may include a control element 36, for example a hydraulic actuator, that controls movement of the support element 32 between the supporting position and the retracted position. The hydraulic actuator 36 is connected to a hydraulic control circuit similar to that shown in Fig. 3b.

Other types of support mechanism 34 may alternatively be provided.

In any of the various embodiments of the invention described herein, the support mechanism 34 may include a control element 36 that controls movement of the support element 32 between the supporting position and the retracted position. The control element 36 may comprise a passive control element or an active control element. A passive control element may, for example, comprise a resilient control element, for example a spring or a pneumatic piston and cylinder. An active control element may comprise an actuator, for example an electrical, mechanical or hydraulic actuator. The actuator may be controlled to move the support element 32 between the supporting position and the retracted position.

If a passive control element is provided, for example a resilient control element such as a spring, it may be configured to urge the support element 32 from the retracted position towards the supporting position. The resilient control element may thus be configured to press the support element 32 against the cylindrical surface of a bale in the bale chamber, but can move towards and away from the bale chamber in response to undulations in the surface of the bale. Thus, in Figs. 3a, 3b and 3c the hydraulic actuator 36 may be replaced by a spring.

If an active control element is provided, for example an actuator, it may be configured to move the support element 32 to the supporting position during one part of the bale making process and to move the support element 32 away from the supporting position to the retracted position during another part of the bale making process. For example, the control element may be configured to move the support element 32 to the supporting position while a bale is being formed in the chamber, and subsequently It may be configured to move the support element 32 to the retracted position during binding of the bale in the bale chamber, so that the support element 32 does not come into contact with the binding material. If stretch film binding material is used, this will help to avoid tearing and other problems that may arise from contact between the binding material and the support element 32.

Alternatively, the control element 36 may be configured to hold the support element 32 in the supporting position during a first part of the binding process, for example while the binding material is being wrapped initially around the bale, and subsequently it may be configured to move the support element 32 to the retracted position, for example while the binding is completed by adding additional layers of binding material to the surface of the bale.

In another embodiment the active control element 36 may comprise a controllable resilient support element, for example a hydraulic actuator. In that case, the resilient force provided by the active control element may be controlled, so that the support element 32 is pressed against the surface of a bale in the bale chamber with different forces at different times according to the stage of the bale making process. For example, the support element 32 may be pressed against the surface of the bale with a first force during formation of the bale, and it may be pressed against the surface of the bale with a second force during binding of the bale, where the second force is less than the first force. The support element 32 will then provide a reduced support function during the binding process and will be less likely to cause tearing of the binding material.

The baler may include a control system 50 that is configured to control operation of the active control element 36, for example an actuator. The control system 50 may for example be configured to control the timing of any movements of the support element 32 between the supporting position and the retracted position, and/or the distance D through which the support element 32 is moved between the supporting position and the retracted position.

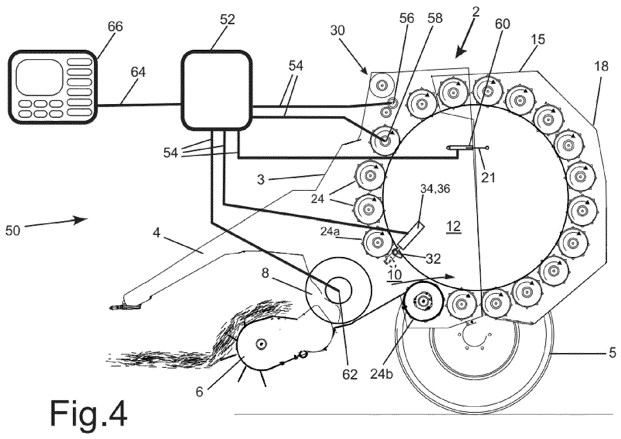

An embodiment of a control system is illustrated schematically in Fig. 4. In this embodiment the support mechanism 34 is similar to the embodiment shown in Fig. 3c and described above. However, the control system may alternatively be employed with any suitable support mechanism 34 including for example those shown in Figs. 3a and 3b.

As illustrated in this embodiment, the control system 50 may include a machine controller 52, for example an electronic control device, that is configured to receive input signals from one or more sensors and/or from the operator, and to provided control signals to one or more components of the baler to control the operation thereof. For example, in this embodiment the machine controller 52 is connected via control lines 54 to one or more actuation and control sensors 56, an rpm sensor 58 associated with one of the pressing elements 24, a bale density sensor 60 associated with the tailgate actuator 21, the control element 36 of the support mechanism 42 and an rpm sensor 62 associated with the rotary feeding device 8. The machine controller 52 is also connected via a control line 64 to a tractor display and data entry device 66, for example an operator interface. It will be appreciated that one or more of the input and output devices mentioned above may be omitted and/or that one or more of additional input and output devices may also be provided.

During operation of the baler 2, bale material 7 is picked up from the ground by the pick-up device 6 and fed by the feeding device 8 into the bale chamber 12 through the feed opening 10. The against the surface of the bale material is rotated by the rotating compression rollers 24 and starts to tumble, forming a cylindrical bale B. As more material is fed into the bale chamber 12 the material is pressed towards the center of the bale chamber 12 by the rotating compression rollers 24, thereby compressing the bale B.

When the bale material is sufficiently compressed and/or when the bale has reached a required size as sensed for example by a sensor attached to the tailgate actuator 21, the feeding of bale material into the bale chamber 12 is stopped and a binding material, for example a net binding material or a stretch film binding material, is fed from a binding device 30 into a gap between the pressing elements 24 and the surface of the bale B, and is wrapped around the compressed bale material as the bale continues to rotate in the bale chamber. usually, in the case of film binding material, several layers of film are applied to the surface of the bale to form the binding. The binding serves to keep the bale material under compression and in shape after the bale B is ejected from the bale chamber 12.

Once the bale has been bound the tailgate 20 is opened by pivoting about the pivot axis 22 under control of the actuator 21, to let the bale B roll out of the bale chamber 12. The pressing elements 24 continue to rotate to help eject the bale B from the bale chamber 12. After ejecting the bale B, the tailgate 20 is closed and the baling process is repeated.

It should be understood that any number of the features of the invention as described herein and as shown in the accompanying drawings may be combined in any single embodiment of the invention, even though the features are described herein only in relation to specific embodiments of the invention.

## Claims

1. A baler including a plurality of pressing elements (24) for rotating and pressing a mass of bale material (7) in a bale chamber (12) to form a round bale (B), a feed opening (10) through which bale material (7) can be fed into the bale chamber (12), the feed opening (10) is located between a pair of said pressing elements (24a,24b), and **characterized by** a support element (32) located within the feed opening (10) between the pair of pressing elements (24a,24b), wherein the support element (32) is displaceable between a supporting position and a retracted position, wherein the supporting position is located adjacent the bale chamber (12) and the retracted position is located further away from the bale chamber (12), wherein the support element (32) is configured to be located in the retracted position during at least a part of a binding operation, in which binding material is applied to the round bale (B) in the bale chamber.

2. A baler according to claim 1, wherein the supporting position and the retracted position are separated by a distance D, where D is at least 1cm, or at least 2cm.

3. A baler according to claim 2, wherein the distance D is in the range 1-10cm, or 2-10cm, or 2-5cm.

4. A baler according to any preceding claim, wherein the bale chamber (12) has a rotational axis and the retracted position is located radially further than the supporting position from the rotational axis.

5. A baler according to any one of the preceding claims, including a binding apparatus (30) for binding the bale (B) in the bale chamber (12) with film material.

6. A baler according to any one of the preceding claims, further comprising a support mechanism (34) that enables the movement of the support element (32) between the supporting position and the retracted position.

7. A baler according to claim 6, wherein the support mechanism (34) enables linear movement of the support element (32).

8. A baler according to claim 6, wherein the support mechanism (34) enables pivoting movement of the support element (32), optionally about a pivot axis (35a) that coincides with a rotational axis of a pressing element (24a), optionally the support element (32) comprises an elongate body and the pivot axis (35a) is located outside of the elongate body.

9. A baler according to any of claims 6 to 8, wherein the support mechanism (34) comprises a control element (36) that controls movement of the support element (32) between the supporting position and the retracted position.

10. A baler according to claim 9, wherein the control element (36) comprises a resilient element that provides a biassing force that urges the support element (32) towards the supporting position.

11. A baler according to claim 10, wherein the resilient element includes a control mechanism that is configured to adjust the biassing force.

12. A baler according to claim 9, wherein the control element (36) comprises an actuator that is operable to move the support element (32) between the supporting position and the retracted position.

13. A baler according to any one of claims 9 to 12, further comprising a control system (50) that controls operation of the control element (36).

14. A baler according to claim 13, wherein the control system (50) is configured move the support element (32) from the supporting position to the retracted position at the start of the binding operation or during the binding operation.

15. A baler according to claim 13 or claim 14, wherein the control system (50) is configured move the support element (32) from the retracted position to the supporting position at or prior to the start of the bale making operation.

16. A baler according to any of claims 13 to 15, wherein the control system (50) includes a user interface (66) via which a user may control operation of the control system (50).

17. A baler according to any one of the preceding claims, wherein the baler (2) is an agricultural baler that is configured for baling an agricultural crop material.

## Patentansprüche

1. Eine Ballenpresse, umfassend eine Vielzahl von Presselementen (24) zum Drehen und Pressen einer Masse von Ballenmaterial (7) in einer Ballenkammer (12), um einen Rundballen (B) zu bilden, eine Zuführungsöffnung (10), durch die Ballenmaterial (7) in die Ballenkammer (12) zugeführt werden kann, wobei die Zuführungsöffnung (10) zwischen einem Paar der Presselemente (24a, 24b) angeordnet ist, und **gekennzeichnet durch** ein Stützelement (32), das innerhalb der Zuführungsöffnung (10) zwischen dem Paar von Presselementen (24a, 24b) angeordnet ist, wobei das Stützelement (32) zwischen einer stützenden Position und einer zurückgezogenen Position verschiebbar ist, wobei die stützende Position benachbart zu der Ballenkammer (12) angeordnet ist und die zurückgezogene Position weiter von der Ballenkammer (12) entfernt angeordnet ist, wobei das Stützelement (32) konfiguriert ist, um während mindestens eines Teils eines Bindebetriebs, in dem Bindematerial auf den Rundballen (B) in der Ballenkammer aufgebracht wird, in der zurückgezogenen Position angeordnet zu sein.

2. Ballenpresse gemäß Anspruch 1, wobei die stützende Position und die zurückgezogene Position durch einen Abstand D getrennt sind, wobei D mindestens 1 cm oder mindestens 2 cm beträgt.

3. Ballenpresse gemäß Anspruch 2, wobei der Abstand D in dem Bereich von 1-10 cm oder 2-10 cm oder 2-5 cm liegt.

4. Ballenpresse gemäß einem der vorhergehenden Ansprüche, wobei die Ballenkammer (12) eine Drehachse aufweist und die zurückgezogene Position radial weiter als die stützende Position von der Drehachse angeordnet ist.

5. Ballenpresse gemäß einem der vorhergehenden Ansprüche, umfassend eine Bindevorrichtung (30) zum Binden des Ballens (B) in der Ballenkammer (12) mit Folienmaterial.

6. Ballenpresse gemäß einem der vorhergehenden Ansprüche, die ferner einen Stützmechanismus (34) beinhaltet, der die Bewegung des Stützelements (32) zwischen der stützenden Position und der zurückgezogenen Position ermöglicht.

7. Ballenpresse gemäß Anspruch 6, wobei der Stützmechanismus (34) die lineare Bewegung des Stützelements (32) ermöglicht.

8. Ballenpresse gemäß Anspruch 6, wobei der Stützmechanismus (34) die Schwenkbewegung des Stützelements (32) ermöglicht, optional um eine Schwenkachse (35a), die mit einer Rotationsachse eines Presselements (24a) zusammenfällt, wobei das Stützelement (32) optional einen länglichen Körper beinhaltet und die Schwenkachse (35a) außerhalb des länglichen Körpers angeordnet ist.

9. Ballenpresse gemäß einem der Ansprüche 6 bis 8, wobei der Stützmechanismus (34) ein Steuerelement (36) beinhaltet, das die Bewegung des Stützelements (32) zwischen der stützenden Position und der zurückgezogenen Position steuert.

10. Ballenpresse gemäß Anspruch 9, wobei das Steuerelement (36) ein federndes Element beinhaltet, das eine Vorspannkraft bereitstellt, die das Stützelement (32) in Richtung der stützenden Position drängt.

11. Ballenpresse gemäß Anspruch 10, wobei das federnde Element einen Steuermechanismus beinhaltet, der konfiguriert ist, um die Vorspannkraft einzustellen.

12. Ballenpresse gemäß Anspruch 9, wobei das Steuerelement (36) einen Aktuator beinhaltet, der betreibbar ist, um das Stützelement (32) zwischen der stützenden Position und der zurückgezogenen Position zu bewegen.

13. Ballenpresse gemäß einem der Ansprüche 9 bis 12, die ferner ein Steuersystem (50) beinhaltet, das den Betrieb des Steuerelements (36) steuert.

14. Ballenpresse gemäß Anspruch 13, wobei das Steuersystem (50) konfiguriert ist, um das Stützelement (32) zu Beginn des Bindebetriebs oder während des Bindebetriebs von der stützenden Position in die zurückgezogene Position zu bewegen.

15. Ballenpresse gemäß Anspruch 13 oder Anspruch 14, wobei das Steuersystem (50) konfiguriert ist, um das Stützelement (32) zu oder vor Beginn des Ballenbildungsbetriebs von der zurückgezogenen Position in die stützende Position zu bewegen.

16. Ballenpresse gemäß einem der Ansprüche 13 bis 15, wobei das Steuersystem (50) eine Benutzerschnittstelle (66) umfasst, über die ein Benutzer den Betrieb des Steuersystems (50) steuern kann.

17. Ballenpresse gemäß einem der vorhergehenden Ansprüche, wobei die Ballenpresse (2) eine landwirtschaftliche Ballenpresse ist, die zum Ballenpressen eines landwirtschaftlichen Erntematerials konfiguriert ist.

## Revendications

1. Une presse à balles incluant une pluralité d'éléments presseurs (24) destinés à faire tourner et à presser une masse de matière pour balle (7) dans une chambre à balle (12) afin de former une balle ronde (B), une ouverture d'alimentation (10) à travers laquelle la chambre à balle (12) peut être alimentée en matière pour balle (7), l'ouverture d'alimentation (10) se trouvant entre une paire de dits éléments presseurs (24a, 24b), et **caractérisée par** un élément de support (32) se trouvant au sein de l'ouverture d'alimentation (10) entre la paire d'éléments presseurs (24a, 24b), dans laquelle l'élément de support (32) peut être bougé entre une position porteuse et une position rétractée, dans laquelle la position porteuse se trouve adjacente à la chambre à balle (12) et la position rétractée se trouve plus loin de la chambre à balle (12), dans laquelle l'élément de support (32) est configuré pour se trouver dans la position rétractée durant au moins une partie d'une opération de liage, au cours de laquelle du matériau de liage est appliqué à la balle ronde (B) dans la chambre à balle.

2. Une presse à balles selon la revendication 1, dans laquelle la position porteuse et la position rétractée sont séparées d'une distance D, où D est au moins de 1 cm, ou au moins de 2 cm.

3. Une presse à balles selon la revendication 2, dans laquelle la distance D est comprise dans l'intervalle allant de 1 à 10 cm, ou de 2 à 10 cm, ou de 2 à 5 cm.

4. Une presse à balles selon n'importe quelle revendication précédente, dans laquelle la chambre à balle (12) a un axe de rotation et la position rétractée se trouve radialement plus loin de l'axe de rotation que la position porteuse.

5. Une presse à balles selon l'une quelconque des revendications précédentes, incluant un appareil de liage (30) destiné à lier la balle (B) dans la chambre à balle (12) avec un matériau en film.

6. Une presse à balles selon l'une quelconque des revendications précédentes, comprenant en outre un mécanisme de support (34) qui rend possible le déplacement de l'élément de support (32) entre la position porteuse et la position rétractée.

7. Une presse à balles selon la revendication 6, dans laquelle le mécanisme de support (34) rend possible un déplacement linéaire de l'élément de support (32).

8. Une presse à balles selon la revendication 6, dans laquelle le mécanisme de support (34) rend possible un déplacement pivotant de l'élément de support (32), facultativement autour d'un axe de pivotement (35a) qui coïncide avec un axe de rotation d'un élément presseur (24a), facultativement l'élément de support (32) comprend un corps allongé et l'axe de pivotement (35a) se trouve en dehors du corps allongé.

9. Une presse à balles selon n'importe lesquelles des revendications 6 à 8, dans laquelle le mécanisme de support (34) comprend un élément de commande (36) qui commande le déplacement de l'élément de support (32) entre la position porteuse et la position rétractée.

10. Une presse à balles selon la revendication 9, dans laquelle l'élément de commande (36) comprend un élément élastique qui fournit une force de sollicitation qui pousse l'élément de support (32) vers la position porteuse.

11. Une presse à balles selon la revendication 10, dans laquelle l'élément élastique inclut un mécanisme de commande qui est configuré pour ajuster la force de sollicitation.

12. Une presse à balles selon la revendication 9, dans laquelle l'élément de commande (36) comprend un actionneur qui peut être mis en fonctionnement afin de déplacer l'élément de support (32) entre la position porteuse et la position rétractée.

13. Une presse à balles selon l'une quelconque des revendications 9 à 12, comprenant en outre un système de commande (50) qui commande le fonctionnement de l'élément de commande (36).

14. Une presse à balles selon la revendication 13, dans laquelle le système de commande (50) est configuré pour déplacer l'élément de support (32) de la position porteuse à la position rétractée au début de l'opération de liage ou durant l'opération de liage.

15. Une presse à balles selon la revendication 13 ou la revendication 14, dans laquelle le système de commande (50) est configuré pour déplacer l'élément de support (32) de la position rétractée à la position porteuse au moment du ou préalablement au début de l'opération de fabrication de balle.

16. Une presse à balles selon n'importe lesquelles des revendications 13 à 15, dans laquelle le système de commande (50) inclut une interface utilisateur (66) par le biais de laquelle un utilisateur peut commander le fonctionnement du système de commande (50).

17. Une presse à balles selon l'une quelconque des revendications précédentes, dans laquelle la presse à balles (2) est une presse à balles agricole qui est configurée pour mettre en balles une matière de récolte agricole.
